# EUROPÄISCHE PATENTSCHRIFT

(11) **EP 2 232 222 B1**
(45) Veröffentlichungstag und Bekanntmachung des Hinweises auf die Patenterteilung: **22.06.2011**
(21) Anmeldenummer: 08870267.5
(22) Anmeldetag: 05.12.2008
(51) Int. Cl.: G01L 19/14, G01P 1/02, H05K 5/00

(54) **KUNSTSTOFFGEHÄUSE MIT INTEGRIERTER STECKERSCHNITTSTELLE**
PLASTIC HOUSING HAVING INTEGRATED PLUG INTERFACE
BOÎTIER EN PLASTIQUE AVEC UNE INTERFACE DE CONNEXION INTÉGRÉE

(30) Priorität: 10.01.2008 DE 102008003848
(43) Veröffentlichungstag der Anmeldung: 29.09.2010
(73) Patentinhaber: Robert Bosch GmbH, 70442 Stuttgart (DE)
(72) Erfinder: KOLTERMANN, Marc, 70197 Stuttgart (DE); HERRMANN, Reinhold, 70469 Stuttgart (DE)
(86) Internationale Anmeldenummer: PCT/EP2008/066860
(87) Internationale Veröffentlichungsnummer: WO 2009/087000

(56) Entgegenhaltungen:
- EP-A- 0 187 902
- DE-C1- 19 755 497
- JP-A- 2006 292 391

## Beschreibung

Aus DE 197 31 420 A1 ist eine Vorrichtung zur Druckmessung bekannt. Die dort gezeigte Vorrichtung wird zur Messung des Drucks im Saugrohr einer Brennkraftmaschine eingesetzt und weist einen als Hybridplatte ausgebildeten Träger auf, der in einem Gehäuse angeordnet ist. Ein als Druckraum vorgesehener erster Gehäuseraum, in dem sich ein auf dem Träger angeordnetes Sensorelement befindet, ist über einen Druckanschluss mit dem Saugrohr verbindbar und gegenüber der Umgebung mit einem zweiten Gehäuseraum mittels eines Klebstoffs abgedichtet. In dem als Bondraum vorgesehenen zweiten Gehäuseraum sind Bonddrähte angeordnet, welche den Träger mit einem Steckerteil elektrisch verbinden.

DE 102 23 357 A1 bezieht sich auf eine Vorrichtung zur Druckmessung. Diese weist ein Gehäuse auf, in dem ein mit einem Sensorelement und mit elektrischen Anschlusselementen versehener Träger angeordnet ist. Das Gehäuse weist einen das Sensorelement umgebenden und mit einem ersten Druckkanal eines ersten Druckanschlusses verbundenen ersten Gehäuseraum und einen gegenüber dem ersten Gehäuseraum abgedichteten, wenigstens die elektrischen Anschlusselemente umgebenden zweiten Gehäuseraum auf. Das Gehäuse weist des Weiteren einen gegenüber dem ersten Gehäuseraum und dem zweiten Gehäuseraum abgedichteten dritten Gehäuseraum auf, der mit einem zweiten Druckkanal eines zweiten Druckanschlusses verbunden ist.

Aus EP0187902 A1, DE 19755497C1 und JP 2006292391 sind Gehäuse mit separat geformten Steckern bekannt.

Bei heute eingesetzten Drucksensorgehäusen wie zum Beispiel Sensorgehäusen für Drucksensoren, sind diese in der Regel als ein Spritzgussteil aus Kunststoff gespritzt. Dies bedeutet, dass das Sensorgehäuse und ein Steckergehäuse zusammen mit Steckerpins in einem Kunststoffwerkzeug gespritzt wird. Bei Steckergehäusen handelt es sich um hochgenaue Teile, was hohe Genauigkeitsanforderungen in einem Arbeitsgang spritzzugießende Drucksensorgehäuse, d.h. dem Sensorgehäuse und das Steckergehäuse stellt. Dadurch wird das Sensorgehäuse zwangsläufig auch mit hohen Anforderungen an dessen Toleranz gefertigt, obwohl dies nicht erforderlich ist. Hinzu kommt, dass bei der Herstellung von Drucksensoren die fertigen Gehäuse, Steckergehäuse und Sensorgehäuse umfassend, einen Aushärteofen durchlaufen. Innerhalb des Aushärteofens erfolgt ein Aushärten der eingesetzten Kunststoffe, was mit einem Thermoverzug einhergeht, der die zuvor hochgenau und minutiös eingehaltenen Steckermaße negativ beeinflusst. Diesem Verzug, der sich beim Durchlaufen des Aushärteofens zwangsläufig einstellt, ist insbesondere bei relativ groß bauenden Sensorgehäusen mit angespritzten Steckergehäusen schwierig vorzubeugen. Des Weiteren ist die Flexibilität äußerst eingeschränkt, weil für nahezu jeden Kundenstecker ein eigenes Sensorgehäuse und ein eigenes dazu erforderliches Spritzgusswerkzeug hergestellt und vorgehalten werden muss.

### Darstellung der Erfindung

Der Erfindung liegt die Aufgabe zugrunde, ein im Wege des Kunststoffspritzgießverfährens hergestelltes Gehäuse mit integrierter Schnittstelle bereitzustellen, welches eine erheblich höhere Flexibilität hinsichtlich Kundensteckervarianten aufweist, und niedrigere Genauigkeitsanforderungen an das Werkzeug stellt, in dem das Kunststoffgehäuse hergestellt wird.

Bei dem Kunststoffgehäuse kann es sich sowohl um ein Gehäuse handeln, in dem ein Sensor untergebracht wird, als auch um ein Kunststoffgehäuse, welches einen Aktor zur Betätigung eines Stellgliedes oder dergleichen aufnimmt.

Erfindungsgemäß wird ein Kunststoffgehäuse gemäß Anspruch 1 und ein Herstellungsverfahren gemäß Anspruch 6 vorgeschlagen.

Erfindungsgemäß wird vorgeschlagen, eine Steckerschnittstelle zur Kontaktierung eines Sensors oder eines Aktors separat von dem Kunststoffgehäuse zu fertigen, in dem der durch die Steckerschnittstelle kontaktierende Sensor bzw. Aktor untergebracht ist. Die Steckerschnittstelle kann an das das Basisteil darstellende Kunststoffgehäuse in einem späteren Prozess zum Beispiel im Wege des Kunststoff-Laserschweißens angeschweißt werden. Dadurch lässt sich ein einfacher ausgebildetes Spritzgießwerkzeug zur Herstellung des Kunststoffgehäuses und ein einfacher ausgebildetes Werkzeug zur Fertigung der jeweiligen Steckerschnittstelle einsetzen. Die erfindungsgemäß vorgeschlagene Lösung erhöht die Flexibilität durch die Möglichkeit, die jeweilige Variante der Steckerschnittstelle des Kunden bzw. das zu deren Herstellung erforderliche Spritzgießwerkzeug einzusetzen, wobei ein gemeinsames Werkzeug zur Fertigung des Kunststoffgehäuses weiterhin eingesetzt werden kann. Die Steckerpins können im Werkzeug durch Wechseleinsätze ausgetauscht werden. Hinsichtlich der Fertigung des Kunststoffgehäuses und der von diesem getrennt gefertigten Steckerschnittstelle, lässt sich eine Kostenersparnis dadurch erreichen, dass nicht zwingend für jede Variante eines Kunststoffgehäuses ein eigenes Spritzgießwerkzeug erforderlich ist. Die erfindungsgemäß vorgeschlagene Lösung erlaubt unter Beibehaltung eines für mehrere Varianten nutzbaren Gehäusewerkzeugs zur Herstellung eines Kunststoffgehäuses für einen Sensor oder einen Aktor eine höhere Flexibilität hinsichtlich der kundenseitig nachgefragten Varianten von Steckerschnittstellen. Das Werkzeug zur Herstellung der Steckerschnittstellen kann einfacher ausgeführt werden, insbesondere ohne Einlegeteile, die in der Regel aus metallischem Material gefertigt sind und der Herstellung der Steckerpins dienen. Im Vergleich zu den Genauigkeitsanforderungen, die an die Steckerschnittstelle, d.h. deren Gehäuse gestellt werden, und die zum Erreichen genauer maßhaltiger Steckerschnittstellen erforderlich sind, können im Vergleich dazu relativ niedrige Genauigkeitsanforderungen an das Werkzeug gestellt werden, indem das Kunststoffgehäuse zur Aufnahme des Sensors bzw. des Aktors gefertigt wird. Des Weiteren ist bei Einsatz der erfindungsgemäß vorgeschlagenen Lösung eine Redundanz bei der Abdichtung der Steckerpins ins Innere des Sensorgehäuses gegeben.

So wird der erfindungsgemäß vorgeschlagenen Lösung folgend, das Kunststoffgehäuse zur Aufnahme eines Sensors oder eines Aktors im Gehäusewerkzeug unter Verwendung von Einlegeteilen zur Fertigung der Steckerpins im Wege des Kunststoffspritzgießverfahrens hergestellt. Für jede Variante einer Steckerschnittstelle eines Kunden, die mit dem Kunststoffgehäuse verbunden werden soll, werden mittels auswechselbarer Einlegeteile eigene Steckerpins mit umspritzt. Dies ist erforderlich, da Steckerpins variable Dicken, Formen, Raster, Oberflächen und Materialien je nach Kundenanforderung aufweisen können. Der erfindungsgemäß vorgeschlagenen Lösung folgend, werden die Steckerschnittstellen separat vom Kunststoffgehäuse gespritzt und durch die einfache Werkzeugform hochgenau hergestellt. Durch die erfindungsgemäß vorgeschlagene Lösung der separaten Fertigung des Kunststoffgehäuses zur Aufnahme eines Sensors bzw. eines Aktors und der eine kundenspezifisch ausgebildete Steckerschnittstelle darstellenden Steckergehäuses lässt sich ein einfacheres Einhalten von Toleranzen, insbesondere bei der Fertigung des hochgenau herzustellenden Steckerteiles erreichen, wobei das geringeren Toleranzanforderungen unterliegende Kunststoffgehäuse zur Aufnahme eines Sensors oder eines Aktors geringeren Toleranzanforderungen gefertigt werden kann und insbesondere ein und dasselbe Spritzgießwerkzeug eingesetzt werden kann. So können die Genauigkeitsanforderung, die einerseits an die Steckerschnittstelle und andererseits an das Kunststoffgehäuse gestellt werden, voneinander im Hinblick auf die Fertigung entkoppelt werden. Ferner vereinfacht sich die Geometrie, in der das Kunststoffgehäuse gefertigt wird durch die Trennung der Fertigung des kundenspezifisch ausgebildeten Steckerteiles, welches die Steckerschnittstelle bildet, dass kleinere Grundkörper Verwendung finden können und eine kunststoffgerechtere Fertigung realisierbar ist.

Das separat gefertigte, die Steckerschnittstelle bildende Steckergehäuse wird auf das getrennt gefertigte Kunststoffgehäuse aufgesteckt und zum Beispiel bis an einen Anschlag angedrückt. Dies bedeutet, dass die am Kunststoffgehäuse angebrachten Steckerpins vom Steckergehäuse umschlossen sind und dieses durchstoßen können. Bei der Montage stoßen die Steckerpins des Kunststoffgehäuses zur Aufnahme eines Sensors oder eines Aktors durch die Bodenfläche des die Steckerschnittstelle darstellenden Steckergehäuses. Beim Durchstoßen der Bodenfläche des Steckergehäuses können z.B. die Steckerpins durch verdrängtes Material an den jeweiligen Durchlässen zusätzlich abgedichtet werden. Das Steckergehäuse wird an seiner Mantelfläche mit dem Kunststoffgehäuse bevorzugt stoffschlüssig verbunden, so zum Beispiel entlang des Umfangs laserverschweißt und damit mechanisch mit dem ein Basismodul darstellenden separat hergestellten Kunststoffgehäuse verbunden.

In vorteilhafter Weise wird durch die erfindungsgemäß vorgeschlagene voneinander getrennte Ausführung von Kunststoffgehäuse zur Aufnahme eines Sensors oder eines Aktors und der Steckerschnittstelle sichergestellt, dass die in das Kunststoffgehäuse, welches ein Basismodul darstellt, eingebetteten Steckerpins einerseits im Kunststoffgehäuse mit umspritzt sind, andererseits bei der Montage des Steckergehäuses nochmals zusätzlich aufgrund des Durchstoßens des Bodens des Steckergehäuses abgedichtet werden können, so dass sich eine redundante Abdichtung der Steckerpins ergibt.

### Kurze Beschreibung der Zeichnungen

Anhand der Zeichnung wird die Erfindung nachstehend eingehender beschrieben, was beispielhaft anhand eines Drucksensors erfolgen soll.

Es zeigt:
- Figur 1: eine einteilig ausgebildete Baueinheit aus Steckerteil und Gehäuseteil,
- Figur 2: ein Schnitt durch den Steckerteil der einteilig ausgebildeten Sensorbaueinheit gemäß der Darstellung in Figur 1,
- Figur 3: eine perspektivische Draufsicht auf ein eine Steckerschnittstelle darstellendes separates Steckergehäuse in einer ersten Ausführungsvariante, stoffschlüssig mit einem Kunststoffgehäuse zur Aufnahme eines Sensors verbunden,
- Figur 3.1: einen Schnitt durch die stoffschlüssige Verbindung zwischen dem Steckerge- häuse in der ersten Ausführungsvariante und dem Kunststoffgehäuse, wie in Fi- gur 3 dargestellt,
- Figur 4.1: eine weitere Ausführungsvariante des Steckergehäuses,
- Figur 4.2: eine weitere Variante des Steckergehäuses,
- Figur 4.3: das Steckergehäuse in seiner ersten Ausführungsform, wie in Figur 3 im stoff- schlüssig gefügten Zustand dargestellt und
- Figur 4.4: die Vorderansicht des Kunststoffgehäuses zur Aufnahme eines Sensors oder eines Aktors mit von einer Umrandung umschlossenen Steckerpins zur elektri- schen Kontaktierung.

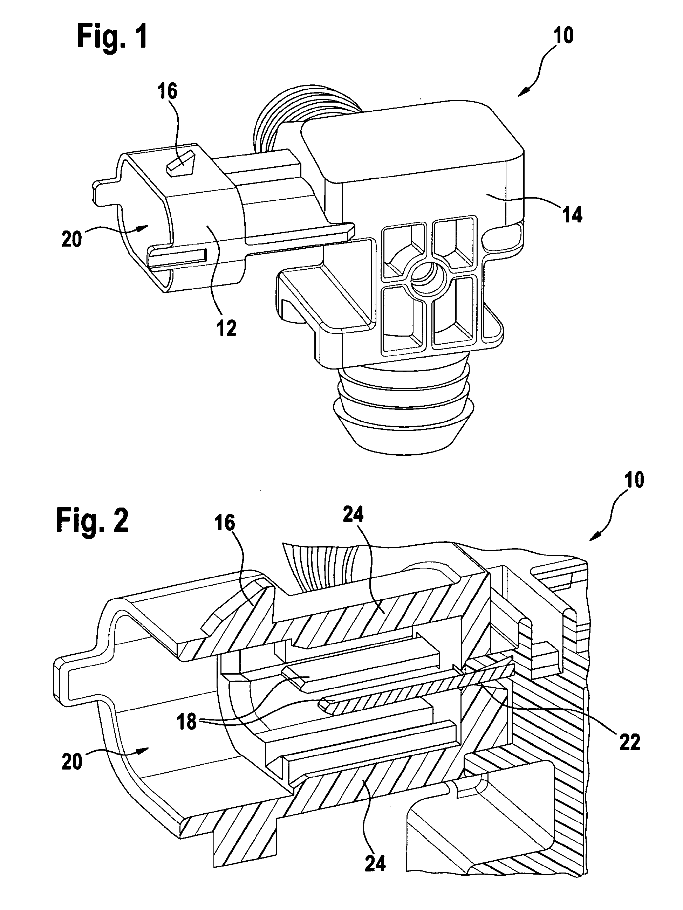

Der Darstellung gemäß Figur 1 ist eine aus dem Stand der Technik bekannte einteilig ausgebildete Sensorbaueinheit zu entnehmen.

Wie der perspektivischen Darstellung gemäß Figur 1 entnommen werden kann, umfasst die einteilig als Kunststoffspritzgussbauteil ausgebildete Sensorbaueinheit 10 einen Steckerteil 12 sowie ein Gehäuseteil 14, die ineinander übergehend ausgeführt sind. Am Steckerteil 12 befindet sich eine Rastnase 16. Das Steckerteil umschließt Steckerpins 18, die in der Schnittdarstellung gemäß Figur 2 zu erkennen sind. Das Steckerteil der einteilig ausgebildeten Sensorbaueinheit gemäß der Darstellung in Figur 1 umfasst eine Steckeröffnung 20, in welche ein Stecker eingeführt und an der Rastnase 16 verrastet werden kann.

Figur 2 zeigt eine Schnittdarstellung durch die Sensorbaueinheit 10 gemäß der Darstellung in Figur 1. Figur 2 zeigt, dass Steckerpins 18 im Kunststoffmaterial der Sensorbaueinheit 10 eingebettet sind. Eine Einbettung zur Aufnahme der Steckerpins 18 ist durch Bezugszeichen 22 gekennzeichnet. Bezugszeichen 24 bezeichnet die gemeinsame Wand des Gehäuseteiles 14 und des Steckerteiles 12 der einteilig ausgebildeten Sensorbaueinheit 10. Die einteilig ausgebildete Sensorbaueinheit, die in den Figuren 1 und 2 dargestellt ist, weist den Nachteil auf, dass das mit relativ hohen Genauigkeitsanforderungen gefertigte Steckerteil 12 zur Aufnahme der kundenspezifisch ausgebildeten Stecker zwar hochgenau gefertigt ist, und anfangs eine hohe Maßhaltigkeit aufweist, jedoch bei einem Aushärteprozess in einem Aushärteofen thermischem Verzug unterliegt. In Bezug auf das Gehäuseteil 14 der einteilig ausgebildeten Sensorbaueinheit 10 ist der sich bei Passage des Aushärteofens aufgrund der dort herrschenden höheren Temperaturen einstellende thermische Verzug von untergeordneter Bedeutung; in Bezug auf das Steckerteil 12 der einteilig ausgebildeten Sensorbaueinheit 10 hat der thermische Verzug jedoch erhebliche Auswirkungen, insbesondere hinsichtlich der zuvor langwierig eingestellten Maßhaltigkeit. Hinsichtlich der Fertigung der einteilig ausgebildeten Sensorbaueinheit 10 gemäß den Darstellungen in Figuren 1 und 2 ist zu sagen, dass das Kunststoffspritzgusswerkzeug, innerhalb dessen die einteilig ausgebildete Sensorbaueinheit 10 mit Steckerteil 12 und Gehäuseteil 14 gefertigt ist, unflexibel hinsichtlich einer Umrüstung auf kundenspezifisch anders konfigurierte Steckerteile 12 ist. Daher sind bei der Lösung mit einteilig ausgebildeter Sensorbaueinheit 10 relativ hohe Umrüst- und Werkzeugkosten in Bezug auf das eingesetzte Spritzgusswerkzeug unvermeidlich.

### Ausführungsformen

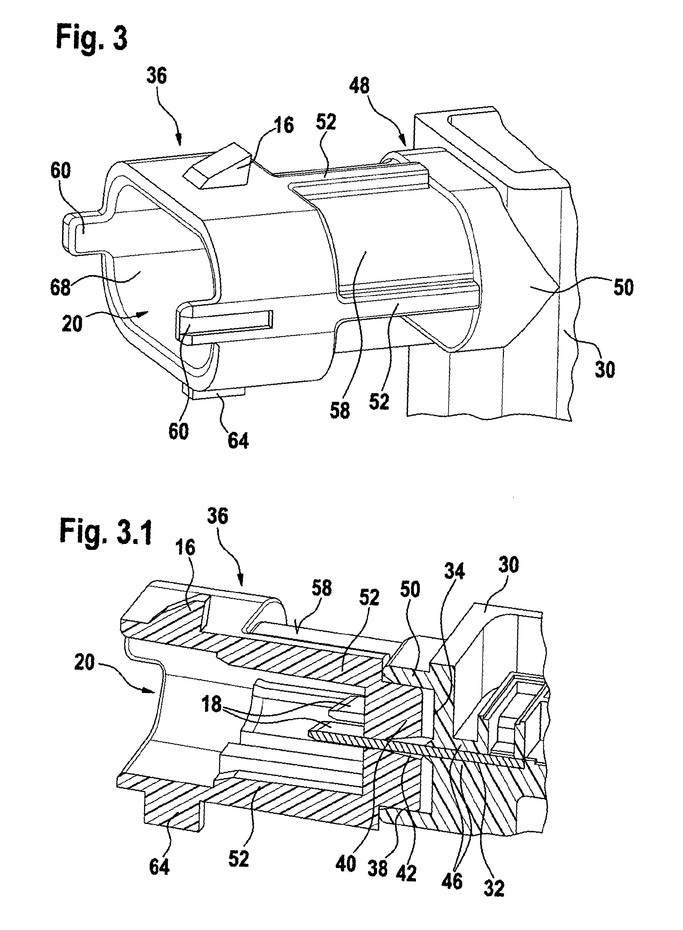

Die Darstellungen gemäß der Figuren 3 und 3.1 zeigen getrennt voneinander gefertigte und anschließend, miteinander gefügte Kunststoffgehäuse für einen Sensor oder einen Aktor bzw. ein Steckergehäuse in einer ersten Ausführungsvariante.

Figur 3 zeigt, dass ein Steckergehäuse 36 in der ersten Ausführungsvariante auf seiner Oberseite die Rastnase 16 und an seiner Unterseite gegebenenfalls eine weitere, untere Verrastung 64 aufweisen kann. Bezugzeichen 60 bezeichnet seitlich angeordnete Rastnasen. An einer Mantelfläche 58 des Steckergehäuses 36 in der ersten Ausführungsvariante verlaufen Längsrippen 72. Die Längsrippen 72 dienen als Führung für einen in der Darstellung gemäß Figur 3 nicht wiedergegebenen Gegenstecker.

Wie aus der Darstellung gemäß Figur 3 des Weiteren hervorgeht, ist am Kunststoffgehäuse 30 zur Aufnahme eines Sensors oder eines Aktors eine Umrandung 50 angespritzt. Die Umrandung 50 umschließt eine Aufnahmeöffnung 34, die am besten aus der Schnittdarstellung gemäß Figur 3.1 hervorgeht. Während das Steckergehäuse 36 in seiner ersten Variante in einem separaten Spritzgusswerkzeug mit hohen Genauigkeitsanforderungen an das erhaltene Spritzgussbauteil gefertigt wird, lässt sich das Kunststoffgehäuse 30 in einem Spritzgießwerkzeug kostengünstiger herstellen, da geforderte Toleranzen wegen der kleineren und insgesamt weniger komplexen Geometrie des Spritzgießwerkzeuges, in dem das Kunststoffgehäuse 30 separat gefertigt wird, erheblich geringer sind als die Toleranzen, die an die Fertigung des Steckergehäuses 36 sowie dessen weitere Ausführungsvarianten in einem Spritzgießwerkzeug gestellt werden.

Figur 3.1 stellt eine Schnittdarstellung der gemäß Figur 3 miteinander gefügten separaten Bauteile, nämlich dem Steckergehäuse in der ersten Ausführungsvariante und dem Kunststoffgehäuse zur Aufnahme eines Sensors oder eines Aktors dar.

Figur 3.1 zeigt, dass das Steckergehäuse 36 in der ersten Ausführungsvariante in die Aufnahmeöffnung 34 des Kunststoffgehäuses 30 eingepasst ist. Eine Passung, die sich zwischen einem Bodenteil 40 des Steckergehäuses 36 in der ersten Ausführungsvariante und der Berandung der Aufnahmeöffnung 34 einstellt, ist in der Schnittdarstellung gemäß Figur 3.1 durch Bezugszeichen 38 kenntlich gemacht. Figur 3.1 zeigt, dass die Steckerpins 18 bei der Montage des Steckergehäuses 36 in der ersten Ausführungsvariante gemäß Figur 3.1 in der Aufnahmeöffnung 34 Öffnungen 42 im Bodenteil des Steckergehäuses 36 durchstoßen können. Bei dem Durchstoßen der mindestens einen Öffnung 42 für mindestens ein Steckerpin 18, welches in der Einbettung 32 im Kunststoffgehäuse 30 zur Aufnahme eines Sensors oder eines Aktors aufgenommen ist, entsteht eine Abdichtung 44 um die die Öffnungen 42 durchsetzenden Steckerpins 18. Beim optionalen Durchstoßen der Steckerpins 18 durch die mindestens eine Öffnung 42 im Bodenteil 40 des Steckergehäuses 36 in der ersten Ausführungsform, verformt sich das die mindestens eine Öffnung 42 im Boden 40 begrenzende Kunststoffmaterial und bildet um die einzelnen Steckerpins 18 die Abdichtung 44. Die erfindungsgemäß vorgeschlagene Lösung der separaten Herstellung von Kunststoffgehäuse 30 und Steckergehäuse 36 in verschiedenen Ausführungsformen wie nachstehend noch dargelegt werden wird, ermöglicht eine redundante Abdichtung der Steckerpins 18, einerseits in der Einbettung 32 des Kunststoffgehäuses 30 und andererseits in der Abdichtung 44 im Bodenteil 40 des Steckergehäuses 36 in der ersten Ausführungsvariante. Der Überstand, um den die Enden der Steckerpins 18 über den Bodenteil 40 durch die Öffnungen 42 hervorstehen, kann durch die Auslegung der Höhe des Bodenteiles 40 des Kunststoffgehäuses 30 zur Aufnahme eines Aktors oder eines Sensors eingestellt werden.

In der in Figur 3.1 dargestellten Schnittdarstellung wird eine Längsrippe 52 gezeigt, die die Funktion eines Abstandhalters für einen Gegenstecker übernimmt. Durch die mindestens eine Längsrippe 52, die an der Mantelfläche 58 des Steckergehäuses 36 in seiner ersten Ausführungsform ausgebildet ist, kann eine Beschädigung bzw. ein Verbiegen der Steckerpins 18 bei der Montage des Steckergehäuses 36 in der durch die Umrandung 50 begrenzten Aufnahmeöffnung 34 des Kunststoffgehäuses 30 zur Aufnahme eines Sensors oder eines Aktors vermieden werden.

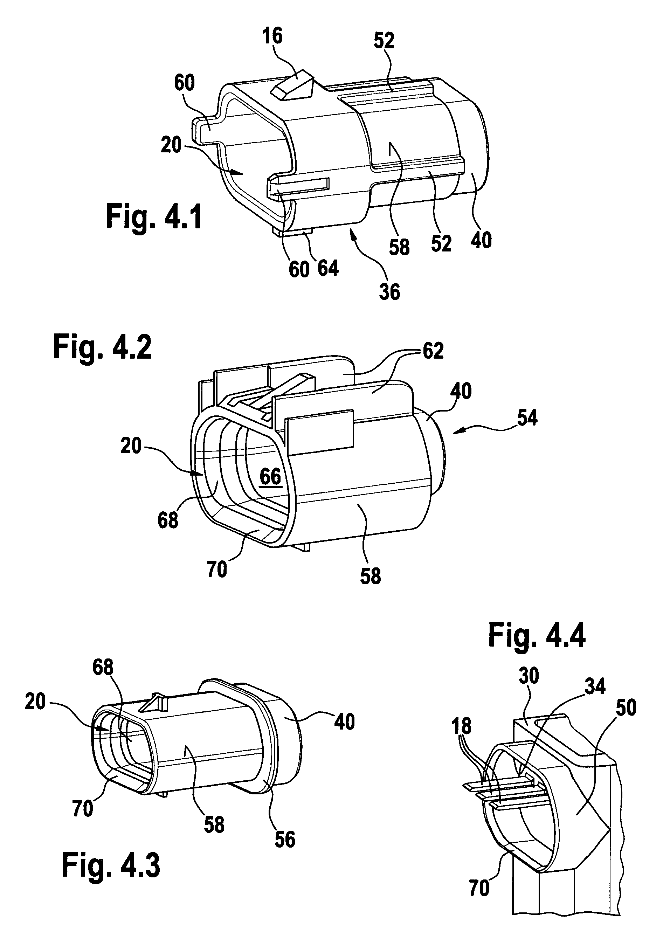

Der Figurensequenz der Figuren 4.1, 4.2 und 4.3 sind beispielhfaft verschiedene Ausführungsvarianten des erfindungsgemäß vorgeschlagenen, separat vom Kunststoffgehäuse zur Aufnahme eines Sensors oder eines Aktors zu fertigenden Steckergehäuses zu entnehmen.

Figur 4.1 zeigt das Steckergehäuse in der ersten Ausführungsform 36 mit der Rastnase 16 und der dieser gegenüberliegenden unteren Verrastung 64. Die Steckeröffnung 20 kann optional mit einer Anschrägung 70 versehen sein um ein leichteres Einstecken des kundenspezifisch konfektionierten elektrischen Steckers zu ermöglichen. Wie in der perspektivischen Darstellung in Figur 4.1 weiter zu erkennen ist, verläuft an der Mantelfläche 58 des Steckergehäuses 36 in der ersten Ausführungsvariante mindestens eine Längsrippe 52. Die Längsrippe 52 erstrecken sich an der Mantelfläche 58 in einer definierten Länge. Es können zwei, vier oder mehr Längsrippen 52 an der Mantelfläche 58 des Steckergehäuses 36 in der ersten Ausführungsvariante vorgesehen sein. Bei der in Figur 4.3 dargestellten dritten Ausführungsvariante 72 des Steckergehäuses übernimmt der umlaufende Bund 56 die Beschränkung der Eintauchtief. Bei der in Figur 4.2 dargestellten Ausführungsvariante des Steckergehäuses 54 ist die Einstecktiefe des Bodenteiles 40 des Steckgehäuses in der zweiten Ausführungsform 54 durch die axiale Länge des Bodenteiles 40 und den sich an diese anschließenden Absatz in der Mantelfläche 48 des Steckergehäuses in der zweiten Ausführungsvariante 54 definiert.

Figur 4.2 zeigt eine weitere mögliche Ausführungsform des Steckergehäuses hier in einer zweiten Ausführungsvariante dargestellt.

In Figur 4.2 ist das Steckergehäuse 54 in einer zweiten Ausführungsform dargestellt. Diese kundenspezifische Ausführungsform des Steckergehäuses 54 wird in einem unter hoher Maßhaltigkeit sicherstellenden Kunststoffspritzgießwerkzeug im Wege des Ein- oder Zweikomponentenspritzgießverfahrens gespritzt. An der Mantelfläche 58 des Steckergehäuses 54 in der zweiten Ausführungsform befinden sich eine Anzahl von Führungsrippen 62, die sich axial zur Mantelfläche 58 des Steckergehäuses 54 in der zweiten Ausführungsvariante erstrecken. Des Weiteren befindet sich zwischen den Rippen 62 angeordnet die Rastnase 16. Gegebenenfalls kann an der Umrandung der Steckeröffnung 20 eine Anschrägung 70 vorgesehen sein, die ein einfaches Einschieben des kundenspezifischen Steckers in die an der Innenwand 68 begrenzte Steckeröffnung 20 ermöglicht. Im Vergleich zur in Figur 4.3 dargestellten dritten Ausführungsvariante des Steckergehäuses 72 ist ein Hohlraum 66, der von der Innenwand 68 des Steckergehäuses 54 in der zweiten Ausführungsvariante umschlossen ist, wesentlich größer.

Angespritzt an eine Stirnseite des Steckergehäuses in der zweiten Ausführungsform 54 befindet sich der Bodenteil 40, der in die in Figur 3.1 im Schnitt und in Figur 4.4 in der perspektivischen Draufsicht dargestellte Aufnahmeöffnung 34 des Sensorgehäuses 30 eingesteckt wird.

Figur 4.3 zeigt eine mögliche dritte Variante des Steckergehäuses 72. Dieses weist neben der Rastnase 16 und eine dieser gegenüberliegend angeordneten unteren Verrastung 64 an der Mantelfläche 58 einen umlaufenden Bund 56 auf. Der umlaufende Bund 56 bestimmt eine Eintauchtiefe, um welche das Bodenteil des Steckergehäuses 72 in der dritten Ausführungsform in die in Figur 3.1 im Schnitt dargestellte Aufnahmeöffnung 34 des Kunststoffgehäuses 30 zur Aufnahme eines Sensors oder eines Aktors eingeschoben wird. Bezugszeichen 68 bezeichnet eine Innenwand des Steckergehäuses 72 in der dritten Ausführungsvariante. In die Steckeröffnung 20 wird ein komplementär zur jeweiligen Ausführungsform des Steckergehäuses 72 ausgebildeter kundenseitiger Stecker eingesteckt. Mit diesem wird die elektrische Kontaktierung zu den von der Mantelfläche 58 des Steckergehäuses 72 in der dritten Ausführungsform umgebenen Steckerpins 18 hergestellt.

Figur 4.4 zeigt in perspektivischer Ansicht das separat vom Steckergehäuse gefertigte Kunststoffgehäuse zur Aufnahme eines Sensors oder eines Aktors.

Aus Figur 4.4 geht hervor, dass die Aufnahmeöffnung 34 von der Umrandung50 umgeben ist. In das Material des Kunststoffgehäuses 30 zur Aufnahme eines Sensors oder eines Aktors gemäß der perspektivischen Draufsicht in Figur 4.4 sind hier nebeneinander liegend drei Steckerpins 18 eingebettet. Die Einbettung 32 ist in der Schnittdarstellung gemäß Figur 3.1 am besten zu erkennen. Zur Erleichterung der Montage des Bodenteiles 40 einer jeden Ausführungsform der separat gefertigten Steckergehäuse 36, 54, 72 in der Aufnahmeöffnung 34 des Kunststoffgehäuses 30 zu erleichtern, befindet sich an der Umrandung 50 der Aufnahmeöffnung 34 eine Anschrägung 70. Diese erleichtert ein verkantungsfreies Einschieben des Bodenteiles 40 und stellt ein beschädigungsfreies Fügen, d.h. Durchstoßen der Steckerpins 18 durch die mindestens eine Öffnung 42 im Bodenteil 40 der Steckergehäuse 36, 54, 72 in seinen unterschiedlichen Ausführungsformen sicher.

Die Fertigung des Kunststoffgehäuses 30 gemäß den Darstellungen in den Figuren 3 und 4 erfolgt zusammen mit dem Einlegen der Steckerpins 18 in das Spritzgießwerkzeug zur Herstellung des Kunststoffgehäuses 30. Für jede Kundensteckervariante müssen mittels eines auswechselbaren Einsatzes (Einlegeteil) eigene Steckerpins 18 mit umspritzt werden. Kundenspezifisch weisen die Steckerpins 18 variable Dicken, Formen, Raster, Oberflächen und Materialien auf. Die Steckergehäuse 36, 54, 72 in den Ausführungsformen stellen Steckerschnittstellen dar, die separat im Wege des Spritzgießverfahrens in einem separaten Werkzeug gefertigt werden und durch eine kleinere und einfachere Werkzeugform hochgenau hergestellt werden können, unabhängig von den geringeren Anforderungen an die Toleranzen, die an das Kunststoffgehäuse 30 zur Aufnahme des Sensors oder des Aktors gestellt werden. Die Maßhaltigkeit, die an die Steckergehäuse 36, 54 und 72 in den verschiedenen Ausführungsvarianten zu stellen sind, liegen im Vergleich zu dem Werkzeug, das für die Herstellung des Kunststoffgehäuses 30 Verwendung findet, deutlich höher. Bei der Montage der die Steckerschnittstelle darstellenden Steckergehäuse 36, 54, 72 in den verschiedenen Ausführungsvarianten erfolgt ein Aufstecken desselben auf das Kunststoffgehäuse 30 zur Aufnahme eines Aktors oder Sensors und ein Hineinpressen in die Aufnahmeöffnung 34. Dabei werden die Steckerpins 18 durch Überpressung an deren Öffnungen 42 zusätzlich abgedichtet, vgl. Bezugszeichen 44 in der Schnittdarstellung gemäß Figur 3.1. Das die kundenseitige Steckerschnittstelle darstellende Steckergehäuse 36, 54, 72 wird an der Mantelfläche 58 mit dem Kunststoffgehäuse 30 zur Aufnahme eines Sensors oder eines Aktors bzw. dessen Umrandung 50 stoffschlüssig verbunden, vgl. Position 48 in Figur 3. Damit ist eine mechanische Verbindung zwischen dem die Steckerschnittstelle darstellenden Steckergehäuse 36, 54, 72 und dem das Basismodul darstellenden Kunststoffgehäuse 30 gegeben.

Die erfindungsgemäß vorgeschlagene Lösung der Herstellung des Steckergehäuses 36, 54, 72 unabhängig vom Kunststoffgehäuse 30 zur Aufnahme eines Sensors oder eines Aktors, ermöglicht eine größere Flexibilität bei Kundenvarianten, insbesondere bei verschieden ausgebildeten Steckergeometrien. Es kann idealerweise immer das baugleiche Kunststoffgehäuse 30 eingesetzt werden. Die erfindungsgemäß vorgeschlagene Lösung führt zu kleiner und einfacher ausgebildeten Spritzgusswerkzeugen und einer höheren Genauigkeit beim Herstellen der Steckerschnittstellen, die durch die verschiedenen Sensorgehäusevarianten dargestellt sind.

Während die Anforderungen an das im Wesentlichen immer baugleiche Kunststoffgehäuse 30 zur Aufnahme eines Sensors oder eines Aktors stets gleich bleibend sind, können abhängig vom Kundenwunsch die komplexeren Steckergeometrien für die Steckergehäuse 36, 54 und 72 in separaten, jedoch kleineren Werkzeugen gebaut werden. An diese kundenspezifisch ausgebildeten Spritzgusswerkzeuge zur Herstellung der Steckergehäuse 36, 54 und 72 werden erheblich höhere Toleranzanforderungen im Vergleich zu den Forderungen, die an das Werkzeug zur Herstellung des Kunststoffgehäuses 30 zur Aufnahme des Sensors oder des Aktors gestellt werden, gestellt.

## Patentansprüche

1. Kunststoffgehäuse (30) mit integrierter Steckerschnittstelle, mit mindestens einem elekttisch zu kontaktierenden Steckerpin (18), wobei der mindestens eine Steckerpin (18) in einer Einbettung (22, 32) im Kunststoffgehäuse (30) aufgenommen ist und das Steckergehäuse (36, 54) und das Kunststoffgehäuse (30) als separate Bauteile gefertigt sind, **dadurch gekennzeichnet, dass** das Steckergehäuse (36, 54) und das Kunststoffgehäuse (30) durch eine stoffschlüssige Verbindung (48) miteinander verbunden sind und dass das Steckergehäuse (36, 54) ein Bodenteil (40) umfasst, welches Öffnungen (42) in einer zur Anzahl der Steckerpins (18) korrespondierenden Zahl aufweist und die Steckerpins (18) durch die Öffnungen (42) des Bodenteils derart durchgestoßen sind, dass verdrängtes Material des Steckergehäuses (36, 54) eine Abdichtung (44) des mindestens einen Steckerpins (18) bildet.

2. Kunststoffgehäuse (30) mit integrierter Steckerschnittstelle gemäß Anspruch 1, **dadurch gekennzeichnet, dass** der mindestens eine Steckerpin (18) aus dem Kunststoffgehäuse (30) heraus in eine Aufnahmeöffnung (34) hineinragt, die von einer Umrandung (50) begrenzt ist.

3. Kunststoffgehäuse (30) mit integrierter Steckerschnittstelle gemäß Anspruch 2, **dadurch gekennzeichnet, dass** die Umrandung (50) mit einer Anschrägung (70) versehen ist.

4. Kunststoffgehäuse (30) mit integrierter Steckerschnittstelle gemäß Anspruch 1, **dadurch gekennzeichnet, dass** an einer Mantelfläche (58) des Steckergehäuses (36, 54) ein umlaufender Bund oder eine Anschlagfläche (56) ausgebildet sind, der/die eine Eintauchtiefe des Bodenteiles (40) in die Aufnahmeöffnung (34) begrenzt.

5. Kunststoffgehäuse (30) mit integrierter Steckerschnittstelle gemäß Anspruch 2, **dadurch gekennzeichnet, dass** das Steckergehäuse (3 6, 54) und das Kunststoffgehäuse (30) entlang einer Umrandung (50) durch eine stoffschlüssige Verbindung (48) miteinander verbunden sind.

6. Verfahren zur Herstellung eines Kunststoffgehäuses (30) mit integrierter Steckerschnittstelle mit nachfolgenden Verfahrensschritten:
a) der Herstellung eines eine Steckerschnittstelle darstellenden Steckergehäuses (36, 54) in einem Spritzgießwerkzeug, wobei das Steckergehäuse (36, 54) ein Bodenteil (40) umfasst, welches Öffnungen (42) in einer zu einer Anzahl von Steckerpins (18) des Kunststoffgehäuses (30) korrespondierenden Zahl aufweist,
b) der Herstellung des Kunststoffgehäuses (30) in einem separaten SpritzgießWerkzeug, wobei mindestens ein steckerpin (18) in einer Einbettung (22, 32) im Kunststoffgehäuse (30) aufgenommen wird.
c) den Fügen des Steckergehäuses (36, 54) in einer Aufnahmeöffnung (34) des Kunststoffgehäuses (30), wobei die Öffnungen (42) des Steckergehäuses (36, 54) beim Fügen durch die Steckerpins (18) derart verformt werden, dass das Material des Steckergehäuses (36, 54) eine Abdichtung (44) des mindestens einen Steckerpins (18) bildet und
d) dem nachfolgenden Erzeugen einer stoffschlüssigen Verbindung (48) zwischen dem Steckergehäuse (36, 54) und dem Kunststoffgehäuse (30).

7. Verfahren gemäß Anspruch 6, **dadurch gekennzeichnet, dass** im Verfahrensschritt c) eine Presspassung (38) zwischen einem Bodenteil (40) und der Umrandung (50) der Aufnahmeöffnung (34) erzeugt wird.

8. Verfahren gemäß Anspruch 7, **dadurch gekennzeichnet, dass** gemäß Verfahrensschritt c) die stoffschlüssige Verbindung (48) zwischen dem Steckergehäuse (36, 54) und der Umrandung (50) durch Laserschweißen oder Verkleben erzeugt wird.

## Claims

1. Plastic housing (30) having an integrated plug interface, comprising at least one plug pin (18) with which electrical contact can be made, with the at least one plug pin (18) being accommodated in an embedded portion (22, 32) in the plastic housing (30), and the plug housing (36, 54) and the plastic housing (30) being produced as separate components, **characterized in that** the plug housing (36, 54) and the plastic housing (30) are connected to one another by a cohesive connection (48), and **in that** the plug housing (36, 54) comprises a base part (40) which has openings (42) in a number which corresponds to the number of plug pins (18), and the plug pins (18) pass through the openings (42) in the base part in such a way that material displaced from the plug housing (36, 54) forms a seal (44) for the at least one plug pin (18).

2. Plastic housing (30) having an integrated plug interface according to Claim 1, **characterized in that** the at least one plug pin (18) projects out of the plastic housing (30) into a receiving opening (34) which is delimited by a border (50).

3. Plastic housing (30) having an integrated plug interface according to Claim 2, **characterized in that** the border (50) is provided with a tapered edge (70).

4. Plastic housing (30) having an integrated plug interface according to Claim 1, **characterized in that** a peripheral collar or a stop face (56) is formed on a casing surface (58) of the plug housing (36, 54), said peripheral collar or stop face delimiting an immersion depth of the base part (40) into the receiving opening (34).

5. Plastic housing (30) having an integrated plug interface according to Claim 2, **characterized in that** the plug housing (36, 54) and the plastic housing (30) are connected to one another along a border (50) by a cohesive connection (48).

6. Method for producing a plastic housing (30) having an integrated plug interface, comprising the following method steps:
a) producing a plug housing (36, 54), which exhibits a plug interface, in an injection-moulding die, with the plug housing (36, 54) comprising a base part (40) which has openings (42) in a number which corresponds to a number of plug pins (18) of the plastic housing (30),
b) producing the plastic housing (30) in a separate injection-moulding die, with at least one plug pin (18) being accommodated in an embedded portion (22, 32) in the plastic housing (30),
c) fitting the plug housing (36, 54) in a receiving opening (34) in the plastic housing (30), with the openings (42) in the plug housing (36, 54) being deformed by the plug pin (18) during the fitting operation in such a way that the material of the plug housing (36, 54) forms a seal (44) for the at least one plug pin (18), and
d) subsequently producing a cohesive connection (48) between the plug housing (36, 54) and the plastic housing (30).

7. Method according to Claim 6, **characterized in that** a press-fit (38) is produced between a base part (40) and the border (50) of the receiving opening (34) in method step c).

8. Method according to Claim 7, **characterized in that** the cohesive connection (48) between the plug housing (36, 54) and the border (50) is produced by laser welding or adhesive bonding according to method step c).

## Revendications

1. Boîtier en plastique (30) avec une interface de connexion intégrée, comprenant au moins une broche de connexion (18) à mettre en contact électrique, l'au moins une broche de connexion (18) étant reçue dans un encastrement (22, 32) dans le boîtier en plastique (30) et le boîtier de connexion (36, 54) et le boîtier en plastique (30) étant fabriqués sous forme de composants séparés, **caractérisé en ce que** le boîtier de connexion (36, 54) et le boîtier en plastique (30) sont connectés l'un à l'autre par une connexion par liaison de matière (48) et **en ce que** le boîtier de connexion (36, 54) comprend une partie de fond (40) qui présente des ouvertures (42) en nombre correspondant au nombre des broches de connexion (18) et les broches de connexion (18) sont enfoncées à travers les ouvertures (42) de la partie de fond de telle sorte que le matériau repoussé du boîtier de connexion (36, 54) forme une étanchéité (44) de l'au moins une broche de connexion (18).

2. Boîtier en plastique (30) avec une interface de connexion intégrée selon la revendication 1, **caractérisé en ce que** l'au moins une broche de connexion (18) pénètre hors du boîtier en plastique (30) dans une ouverture de réception (34) qui est limitée par un rebord périphérique (50).

3. Boîtier en plastique (30) avec une interface de connexion intégrée selon la revendication 2, **caractérisé en ce que** le rebord périphérique (50) est pourvu d'un biseautage (70).

4. Boîtier en plastique (30) avec une interface de connexion intégrée selon la revendication 1, **caractérisé en ce qu'**un épaulement périphérique ou une surface de butée (56) est réalisé sur une surface d'enveloppe (58) du boîtier de connexion (36, 54), lequel ou laquelle limite une profondeur d'enfoncement de la partie de fond (40) dans l'ouverture de réception (34).

5. Boîtier en plastique (30) avec une interface de connexion intégrée selon la revendication 2, **caractérisé en ce que** le boîtier de connexion (36, 54) et le boîtier en plastique (30) sont connectés l'un à l'autre le long d'un rebord périphérique (50) par une connexion par liaison de matière (48).

6. Procédé de fabrication d'un boîtier en plastique (30) avec une interface de connexion intégrée, comprenant les étapes de procédé suivantes :
a) fabrication d'un boîtier de connexion (36, 54) constituant une interface de connexion dans un outil de moulage par injection, le boîtier de connexion (36, 54) comprenant une partie de fond (40) qui présente des ouvertures (42) en nombre correspondant au nombre des broches de connexion (18) du boîtier en plastique (30),
b) la fabrication du boîtier en plastique (30) dans un outil de moulage par injection séparé, au moins une broche de connexion (18) étant reçue dans un encastrement (22, 32) dans le boîtier en plastique (30),
c) l'assemblage du boîtier de connexion (36, 54) dans une ouverture de réception (34) du boîtier en plastique (30), les ouvertures (42) du boîtier de connexion (36, 54) étant déformées lors de l'assemblage par les broches de connexion (18) de telle sorte que le matériau du boîtier de connexion (36, 54) forme une étanchéité (44) pour l'au moins une broche de connexion (18) et
d) la production subséquente d'une connexion par liaison de matière (48) entre le boîtier de connexion (36, 54) et le boîtier en plastique (30).

7. Procédé selon la revendication 6, **caractérisé en ce que** dans l'étape de procédé c), un ajustement par pressage (38) est produit entre une partie de fond (40) et le rebord périphérique (50) de l'ouverture de réception (34).

8. Procédé selon la revendication 7, **caractérisé en ce que** conformément à l'étape de procédé c), la connexion par liaison de matière (48) entre le boîtier de connexion (36, 54) et le bord périphérique (50) est réalisée par soudage au laser ou collage.
